# EUROPÄISCHE PATENTANMELDUNG

(11) **EP 0 588 453 A1**
(43) Veröffentlichungstag der Anmeldung: **23.03.1994**
(21) Anmeldenummer: 93250224.8
(22) Anmeldetag: 12.08.1993
(51) Int. Cl.: G01D 11/24

(54) **Messumformer**

(30) Priorität: 18.09.1992 DE 9212832 U
(71) Anmelder: SIEMENS AKTIENGESELLSCHAFT, D-80333 München (DE)
(72) Erfinder: Krisch, Burkhard, Dipl.-Phys., D-12307 Berlin (DE); Thies, Werner, Dipl.-Ing., D-76133 Karlsruhe (DE); Weber, Günter, D-13591 Berlin (DE)

(57) **Zusammenfassung**

Die Erfindung bezieht sich auf einen Meßumformer mit einem topfförmigen Gehäuse, das an seiner offenen Frontseite mit einem Deckel verschließbar ist. Hinter dem Deckel weist er quer zur Längsachse des Gehäuses eine Anzeigevorrichtung auf und ist im Bereich der Frontseite mit einem äußeren Ansatz mit betätigbaren Einstellelementen versehen.

Um einen solchen Meßumformer mit leicht zugänglichen und relativ kostengünstigen Einstellelementen auszurüsten, sind die Einstellelemente Drucktasten (7,8,9), die an einer frontseitigen Fläche (5) des äußeren Ansatzes (4) angeordnet sind. Die Drucktasten (7,8,9) sind mit einem Schutzdeckel (10) abgedeckt.

## Beschreibung

Die Neuerung bezieht sich auf einen Meßumformer mit einem topfförmigen Gehäuse, das an seiner offenen Frontseite mit einem Deckel verschließbar ist, hinter dem Deckel auf quer zur Längsachse eine Anzeigevorrichtung aufweist und zumindest im Bereich der Frontseite mit einem äußeren Ansatz versehen ist, der von außen betätigbare Einstellelemente trägt.

Bei einem bekannten Meßumformer dieser Art (DE-GM 84 07 654), bei dem es sich um einen Druck- oder Druckdifferenzumformer handeln kann, besteht die Anzeigevorrichtung aus einem Zeigermeßwerk, das im Innern des topfförmigen Gehäuses quer zur Längsachse des Gehäuses angeordnet ist. Zur Feineinstellung des bekannten Meßumformers sind Feineinstell-Potentiometer mit jeweils einer Einstellwelle vorgesehen, die über einen Schneckentrieb von außen betätigbar ist. Die Betätigung erfolgt von der Seite des Meßumformers her, indem dort mit einem Schraubendreher eingegriffen wird.

Der Neuerung liegt die Aufgabe zugrunde, einen Meßumformer mit einem topfförmigen Gehäuse und von außen betätigbaren Einstellelementen vorzuschlagen, bei dem relativ kostengünstige Einstellelemente zur Betätigung leicht zugänglich angeordnet sind.

Zur Lösung dieser Aufgabe sind bei einem Meßumformer der eingangs angegebenen Art neuerungsgemäß die Einstellelemente Drucktasten, die an einer frontseitigen Fläche des äußeren Ansatzes angeordnet sind; die Drucktasten sind mit einem Schutzdeckel abgedeckt.

Ein Vorteil des neuerungsgemäßen Meßumformers besteht darin, daß anstelle komplizierter Einstellelemente in Form von Potentiometern mit Schneckentrieb Drucktasten verwendet sind, bei denen es sich um verhältnismäßig kostengünstige Einstellelemente handelt. Ein weiterer Vorteil des neuerungsgemäßen Meßumformers wird darin gesehen, daß die Drucktasten an einer frontseitigen Fläche des äußeren Ansatzes angeordnet sind, wodurch sie leicht zugänglich und damit leicht zu betätigen sind. Dabei ist durch einen Schutzdeckel dafür gesorgt, daß die Drucktasten nicht vesehentlich betätigt werden können.

Es ist zwar aus "Control Engineering", Sept. 1990, Seiten 80 und 81 bzw. Nov. 1990, Seiten 40 und 41 ein Meßumformer für Temperatur und Druck bekannt, bei dem Einstellemente zur Einstellung von Spanne und Nullpunkt in Form von Drucktasten verwendet sind, jedoch befinden sich diese Drucktasten in Innern des topfförmigen Gehäuses des bekannten Meßumformers hinter einer Glasscheibe eines das topförmige Gehäuse an seiner offen Frontseite verschließenden Deckels. Eine leichte Zugänglichkeit der Drucktasten ist dadurch nicht gegeben.

Bei dem neuerungsgemäßen Meßumformer kann der Schutzdeckel für die Drucktasten in unterschiedlicher Weise ausgebildet sein, beispielsweise auf den äußeren Ansatz an der Frontseit aufgeschnappt sein. Als besonders vorteilhaft wird es jedoch angesehen, wenn der Schutzdeckel als Klappdeckel ausgebildet ist und in seiner die Drucktasten Lage durch Schrauben gehalten ist. Dadurch ist nämlich der Forderung genügt, eine Betätigung der Drucktasten nur nach Benutzen eines Werkzeuges, im vorliegenden Falle eines Schraubendrehers, zu ermöglichen.

Die Benutzung eines Schutzdeckels erlaubt es in vorteilhafterweise auch, auf dessen Außenseite eine anwenderspezifische Kennzeichnung vorzusehen, so daß dadurch in einer größeren Anlage die einzelnen Meßumformer gut erkennbar bezeichnet werden können.

Zur Erläuterung der Neuerung ist in
Figur 1 eine Seitenansicht eines Ausführungsbeispieles des neuerungsgemäßen Meßumformers mit herausgebrochen dargestellter Anzeigevorrichtung mit Klappdeckel und in
Figur 2 eine Frontansicht desselben Ausführungsbeispieles bei abgenommenem Deckel des Gehäuses und abgenommenem Klappdeckel dargestellt.

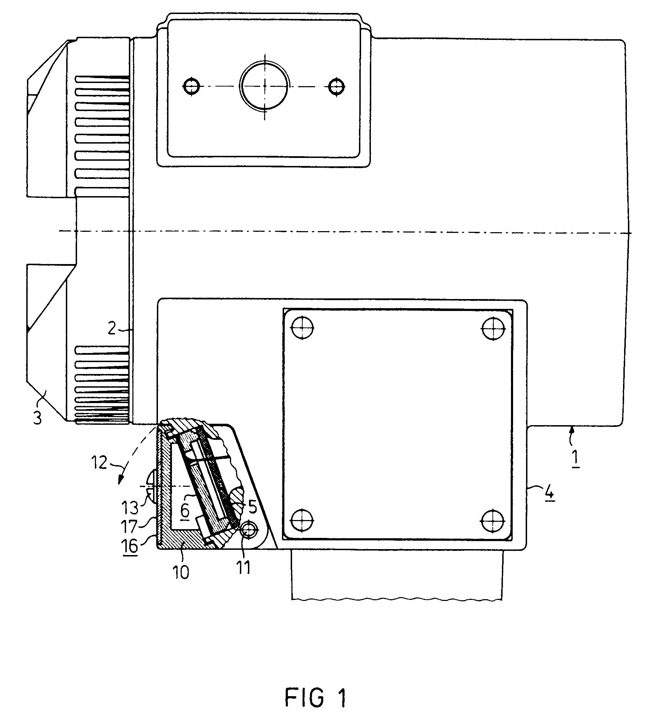

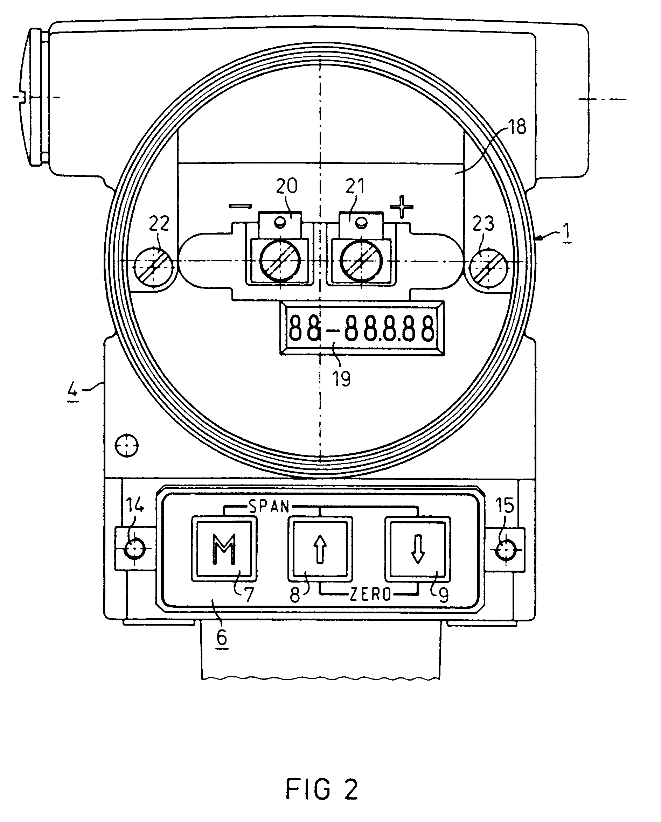

Wie die Figuren 1 und 2 erkennen lassen, besitzt der neuerungsgemäße Meßumformer ein topfförmiges Gehäuse 1, das an seiner Frontseite 2 mit einem Deckel 3 in Form eines Schraubdeckels verschlossen ist. Das topfförmige Gehäuse 1 ist mit einem äußeren Ansatz 4 versehen, der sich etwa über den gesamten Druchmesser des topfförmigen Gehäuses 1 erstreckt (vgl. Fig. 2) und bis nahe an die Frontseite 2 des Gehäuses 1 gezogen ist, wie Figur 1 erkennen läßt.

Wie ferner Figur 1 zeigt, ist der äußere Ansatz 4 zur Frontseite des Meßumformers hin mit einer schrägen Aufnahmefläche 5 versehen, an der eine Anordnung 6 mit Drucktasten 7, 8 und 9 befestigt ist (siehe Fig. 2). Die Drucktasten 7 bis 9, die bevorzugt als Folientasten ausgebildet sind, sind durch einen Schutzdeckel 10 abdeckbar, der in dem dargestellten Ausführungsbeispiel als Klappdeckel ausgebildet ist. Zu diesem Zwecke ist der Schutzdeckel 10 beidseitig mittels jeweils eines Zapfenlagers 11 schwenkbar gelagert, von dem in der Fig. 1 nur ein Lager sichtbar ist. Der Schutzdeckel 10 kann zum Betätigen der Drucktasten 7 bis 9 in Richtung des Pfeiles 12 geschwenkt werden, nachdem Schrauben 13, die in Gewindebohrungen 14 und 15 eingreifen, gelöst worden sind. In den Schutzdeckel 10 ist eine Metallplatte 16 eingelegt, die auf ihrer Außenseite 17 mit anwenderspezifischen Kennzeichnungen versehen sein kann.

Wie Figur 2 ergänzend zeigt, befindet sich im Innern des topfförmigen Gehäuses 1 auf einem Tragkörper 18 eine Anzeigevorrichtung 19, die vorzugsweise als LCD-Anzeigevorrichtung ausgebildet ist. Auf dem Tragkörper 18 sind außer der Anzeigevorrichtung 19 noch weitere Elemente aufgebracht, von denen in der Figur 2 nur zwei Anschlußklemmen 20 und 21 dargestellt sind. Der gesamte Tragkörper ist mittels Schrauben 22 und 23 innen am topfförmigen Gehäuse 1 angeschraubt.

## Patentansprüche

1. Meßumformer mit einem topfförmigen Gehäuse, das an seiner offenen Frontseite (2) mit einem Deckel (3) verschließbar ist,
hinter dem Deckel (2) quer zur Längsachse des Gehäuses (1) eine Anzeigevorrichtung (19) aufweist und
zumindest im Bereich der Frontseite (2) mit einem äußeren Ansatz (4) versehen ist, der von außen betätigbare Einstellelemente (7, 8, 9) trägt,
**dadurch gekennzeichnet,** daß die Einstellemente Drucktasten (7, 8, 9) sind, die an einer frontseitigen Fläche (5) des äußeren Ansatzes (4) angeordnet sind, und
daß die Drucktasten (7, 8, 9) mit einem Schutzdeckel (10) abgedeckt sind.

2. Meßumformer nach Anspruch 1,
**dadurch gekennzeichnet,** daß der Schutzdeckel als Klappdeckel (10) ausgebildet ist und in seiner die Drucktasten (7, 8, 9) abdeckenden Lage durch Schrauben (13) gehalten ist.

3. Meßumformer nach Anspruch 1 oder 2,
**dadurch gekennzeichnet,** daß der Schutzdeckel (10) auf seiner Außenseite (17) mit einer anwenderspezifischen Kennzeichnung versehen ist.
